# EUROPEAN PATENT APPLICATION

(11) **EP 3 936 960 A1**
(43) Date of publication of application: **12.01.2022**
(21) Application number: 20465544.3
(22) Date of filing: 08.07.2020
(51) Int. Cl.: G05D 1/00, B60W 60/00, B60W 50/029, B62D 15/02

(54) **CONTROL METHOD AND CONTROL SYSTEM TO GUIDE A MALFUNCTIONAL AUTONOMOUS VEHICLE**

(71) Applicant: Continental Automotive GmbH, 30165 Hannover (DE)
(72) Inventor: Aldea-Ungurean, Doru-Marian, 81737 München (DE)
(74) Representative: Continental Corporation

(57) **Abstract**

The invention relates to control method to guide a malfunctional autonomous vehicle (12) with a remote-control unit (14), wherein data of the surroundings (18) of the autonomous vehicle (12) are captured and processed into acceleration and/or steering control commands (27), wherein the autonomous vehicle (12) is actuated according to the acceleration and/or steering control commands (27). The invention further relates to a corresponding control system (10).

## Description

The invention relates to a control method and a corresponding control system with which a malfunctional autonomous vehicle can be guided for example to a service or a fleet workshop.

Autonomous vehicles, in particular commercial vehicles like trucks or busses, are designed to be able to drive without a human driver and therefore comprise driving and control means to enable the autonomous drive. On the one hand the driving means is designed to move the autonomous vehicle over a predetermined trajectory. On the other hand, the control means is provided to monitor the surroundings of the autonomous vehicle in order to survey the correct positioning of the autonomous vehicle on the trajectory and further to capture permanently changing data about the surroundings to avoid accidents due to for example suddenly appearing objects.

During the lifetime of an autonomous vehicle it can sometimes occur that devices being critical for the autonomous drive will not function properly anymore. For example, if a positioning system is not functioning correct, the position provided by the positioning device is not reliable anymore and due to security reasons, the vehicle cannot drive autonomously to the destination.

Also, if for example surveillance devices like radar or lidar are suffering malfunctions, an autonomous drive cannot be carried out anymore.

If an autonomous vehicle is not able to drive autonomously anymore, the autonomous vehicle has to immediately stop and usually a human driver is going to pick up the vehicle in order to drive the vehicle to a workshop.

The timespan until a human driver arrives at the malfunctional autonomous vehicle can be quite long and critical situations can arise, for example in cases where the autonomous vehicle is broken down on a highway with fast and frequent traffic.

Therefore, a system would be suitable in which a human driver does not need to be sent to the broken-down autonomous vehicle.

Object of the invention is therefore to provide a control method to guide a malfunctional autonomous vehicle without the need of a human driver.

This object is met by a control method with the feature combination of claim 1.

A control system with which a malfunctional autonomous vehicle can be guided without the need of a human driver is subject matter of a further independent claim.

Advantageous embodiments of the invention are subject matter of the dependent claims.

A control method to guide a malfunctional autonomous vehicle, in particular an autonomous commercial vehicle, comprises the following steps:
- providing a remote-control unit with a monitoring means to monitor the surroundings of the autonomous vehicle, the remote-control unit further comprising a first wireless communication means to enable wireless communication;
- providing a processing means to process the data captured by the monitoring means;
- providing the autonomous vehicle with a second wireless communication means to enable wireless communication, the autonomous vehicle further comprising an actuator unit to enable actuation of the autonomous vehicle;
- capturing the data of the surroundings of the autonomous vehicle and communicating the captured data to the processing means;
- processing the captured data into acceleration and/or steering control commands;
- sending the acceleration and/or steering control commands to the actuator unit; and
- actuating the autonomous vehicle according to the received acceleration and/or steering control commands.

According to this method it is not necessary to send a human driver to the malfunctional autonomous vehicle as a remote-control unit is now able to guide the autonomous vehicle for example to a service or fleet workshop. The remote-control unit takes over all functions which are not working anymore in the autonomous vehicle and which are critical for driving the autonomous vehicle without a human driver. To be able to take over these functionalities, the remote-control unit comprises a monitoring means with which the remote-control unit is able to monitor the surroundings of the autonomous vehicle. The monitoring means can for example be a GPS system, a positioning system and/or surveillance devices like radar or lidar with which the surroundings can be monitored.

The data captured by the remote-control unit are then sent to a processing means which processes these data such that acceleration and/or steering control commands can be put out.

The acceleration control commands can be control commands to speed up or to brake the autonomous vehicle, wherein the steering control commands can be control commands to steer the autonomous vehicle to the right, to the left, forwards and/or backwards.

The captured data can be directly communicated from the remote-control unit to the processing means, but it is also possible to send the captured data first to a backend to collect these data and then to forward the data from the collecting backend to the processing means. The processing means can be located in the remote-control unit, but it is also possible to locate the processing means directly in the autonomous vehicle or also in a potential backend.

The communication between all these devices takes place via wireless communication so there is no need to physically connect the autonomous vehicle, the remote-control unit, the optional backend and the processing means to each other.

After the control commands are acquired, they are sent to an actuator unit located in the autonomous vehicle which is then able to actuate the autonomous vehicle based on these control commands.

The control method therefore provides an easy way to guide an autonomous vehicle which is not able to drive autonomously anymore due to some malfunctions for example of the radar/lidar or positioning system.

The control commands can be commands like
- "start movement forward in the direction of x degree";
- "movement on in the direction of x degree and forwards";
- "stop movement";
- "start movement backwards in the direction of y degree".

In one example, the remote-control unit is provided by a drone, wherein in particular the monitoring means being provided by at least two video cameras to capture the data of the surroundings, wherein in particular the data surroundings are captured while the drone is moving.

In a more advantageous example, the drone comprises four video cameras in order to be able to fully monitor the surroundings of the autonomous vehicle.

It is advantageous if the data of the surroundings are not only captured when the autonomous vehicle is started, but also during its guided drive. Therefore, it is advantageous that the drone keeps capturing the data of the surroundings while it is moving.

In one implementation the drone is moving in the neighborhood of the autonomous vehicle when the autonomous vehicle is being actuated according to the received acceleration and/or steering control commands.

It is also possible to let the drone move further away from the autonomous vehicle to provide advanced data about the trajectory. But to enable higher security of the guidance of the autonomous vehicle the drone keeps moving in its neighborhood.

In case the drone is directly communicating with the processing means, the drone interprets the data captured from the video cameras and sends them via the first wireless communication means to the processing means. The processing means can for example be a part of an ECU of the autonomous vehicle.

In one example the actuator unit is provided with a gyroscope and an accelerometer, the gyroscope and the accelerometer sending an actuation feedback to the processing means, the processing means processing the captured data into acceleration and/or steering control commands based on the actuation feedback.

Therefore, in one example, all functions are based on movement coordination using data from the gyroscope and the accelerometer to manage the driving movement of the malfunctional autonomous vehicle.

In one example the acceleration and/or steering control commands are executed by one of an acceleration means for speeding up and braking the autonomous vehicle, a steering means for steering the autonomous vehicle and a directional means to direct the autonomous vehicle to the forward or to the backward direction.

These devices are in particular located within the actuator unit, such that the actuator unit includes actuator capabilities for speed, the left or right direction and the forwards or backwards direction and of course a braking function. The different devices execute the control commands from the processing means and therefore drive the autonomous vehicle.

In particular before starting to actuate the autonomous vehicle based on the control commands it is checked if the acceleration means, the steering means and the directional means provide operational reliability. If for example one of these devices is not working properly, the autonomous vehicle cannot be guided away from the point of brake down.

In one example, the malfunctional autonomous vehicle communicates an assistance demand due to malfunction to a logistics center, the logistics center controlling the remote-control unit.

Autonomous vehicles usually comprise monitoring units to monitor all functionalities in the autonomous vehicle. As soon as the monitoring means notices a malfunction of for example the positioning system and/or radar and/or lidar or any similar device being critical for autonomous driving, it is possible that the autonomous vehicle by itself sends an assistance demand via the second communication means to the logistics center. The logistics center can for example be a fleet service the autonomous vehicle is allocated to.

In a further example, it is also possible that the logistics center notices that the malfunction of the autonomous vehicle without any direct communication of an assistance demand. This can for example be possible, if the logistics center is in permanent contact with the monitoring devices inside the autonomous vehicle and therefore is able by itself to notice a malfunction.

In case the malfunction of the autonomous vehicle is noticed by the logistics center, the logistics center sends the remote-control unit to the position where the autonomous vehicle broke down. Hence, the logistics center controls the remote-control unit at least in a way to enable the remote-control unit to find the broken-down autonomous vehicle.

A control system to guide a malfunctional autonomous vehicle comprises a remote-control unit with a monitoring means to monitor the surroundings of the autonomous vehicle, the remote-control unit further comprising a first wireless communication means to enable wireless communication. Further, the control system comprises a logistics center comprising a third wireless communication means to communicate with the autonomous vehicle and with the remote-control unit, the logistics center being designed to control the remote-control unit. Moreover, the control system comprises a processing means to process data captured by the remote-control unit when monitoring the surroundings of the autonomous vehicle into acceleration and/or steering control commands, the processing means in particular being designed to process the data captured by the remote-control unit based on an actuation feedback of the autonomous vehicle.

The logistics center can for example be a provided backend which is able to communicate with the autonomous vehicle as well as with the remote-control unit.

In one example the remote-control unit is a drone having at least two video cameras to capture the data of the surroundings. In one more particular example the remote-control unit comprises four video cameras.

In one implementation, the control system comprises an acceleration means for speeding up and breaking the autonomous vehicle, a steering means for steering the autonomous vehicle, a directional means to direct the autonomous vehicle to the forward or to the backward direction, a gyroscope and an accelerometer.

With these devices the autonomous vehicle will be enabled to drive without the help of a human driver.

An example of the invention is described in the following with reference to the accompanying drawings, wherein:
- Fig. 1: shows a schematic side view of a control system to guide a malfunctional autonomous vehicle; and
- Fig. 2: shows a schematic flow chart with steps of a control method to guide the malfunctional autonomous vehicle of Fig. 1.

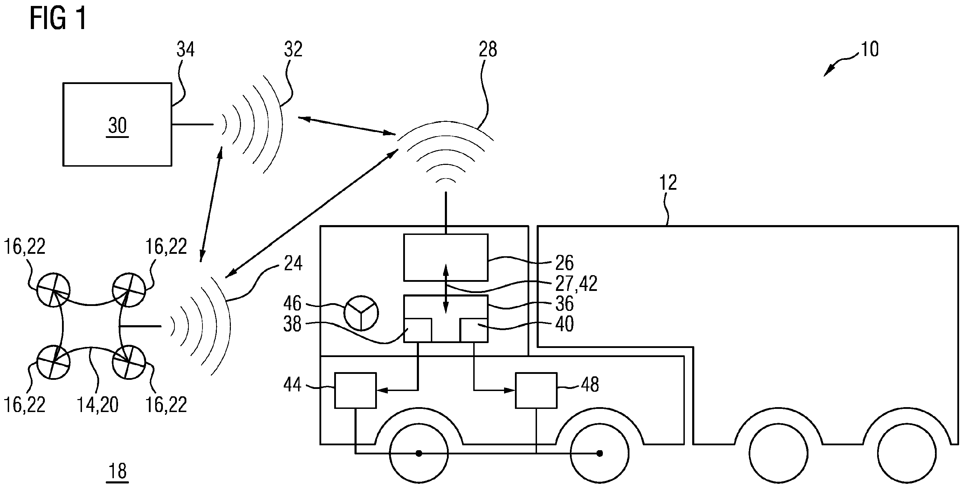

Fig. 1 shows a schematic side view of a control system 10 to guide a malfunctional autonomous vehicle 12. The control system 10 comprises a remote-control unit 14 with a monitoring means 16 in order to monitor surroundings 18 of the autonomous vehicle 12.

In the example shown in fig. 1, the remote-control unit 14 is implemented by a drone 20 which comprises four video cameras 22 as monitoring means 16.

The remote-control unit 14 comprises a first wireless communication means 24 with which the remote-control unit 14 is able to communicate data, for example data captured from the surroundings 18, to other parts of the control system 10.

The control system 10 further comprises a processing means 26 which is able to process the data from the surroundings 18 captured by the remote-control unit 14 via its monitoring means 16. The processing means 26 processes these data into acceleration and/or steering control commands 27 based on which the malfunctional autonomous vehicle 12 can be actuated.

In the example in fig. 1 the processing means 26 is located in the autonomous vehicle 12, but it is also possible to locate the processing means 26 directly in the remote-control unit 14.

In order to enable communication between the remote-control unit 14 and the processing means 26 the autonomous vehicle 12 further comprises a second wireless communication means 28 with which data and/or control commands 27 can be received.

As can be further seen, in the example in fig. 1 the control system 10 further comprises a backend 30 comprising a third wireless communication means 32. The backend 30 can be located in a logistics center 34, for example a fleet provider the autonomous vehicle 12 is allocated to. Via the third wireless communication means 32 the backend 30 is able to communicate with the autonomous vehicle 12 and with the remote-control unit 14.

In an alternative example, it is also possible, to send the captured data of the surroundings 18 directly to the backend 30, provide the processing means 26 in the backend 30, generate the control commands 27 in the backend 30 and then send them to the autonomous vehicle 12.

In the example in fig. 1, the data of the surroundings 18 are captured by the monitoring means 16 of the drone 20, in particular by the video cameras 22, and are then directly sent to the processing means 26 in the autonomous vehicle 12 via the first wireless communication means 24 and the second wireless communication means 28.

The autonomous vehicle 12 in the example comprises an actuator unit 36 which receives the control commands 27 directly from the processing means 26. The actuator unit 36 comprises a gyroscope 38 and an accelerometer 40 which on their part generate data in form of an actuation feedback 24 generated during the actuation of the autonomous vehicle 12. Based on this actuation feedback 24 the processing means 26 is enabled to more precisely process the data from the surroundings 18 into control commands 27.

The actuator unit 36 comprises an acceleration means 44 with which the autonomous vehicle 12 can be speeded up and braked down, a steering means 46 to steer the autonomous vehicle 12 to the left or to the right, and a directional means 48 to direct the autonomous vehicle 12 forwards or backwards. Based on the control commands 27 from the processing means 26 the actuator unit 36 sends signals to the acceleration means 44, steering means 46 and directional means 48 to drive the autonomous vehicles 12 according to the control commands 27.

With the control system 10 it is possible to guide a broken-down autonomous vehicle 12, for example in case of malfunctions of radar, lidar or positioning systems, by a drone 20 to arrive to a service or fleet workshop. The control system 10 can be used in case of an emergency to guide a truck, bus or another commercial vehicle.

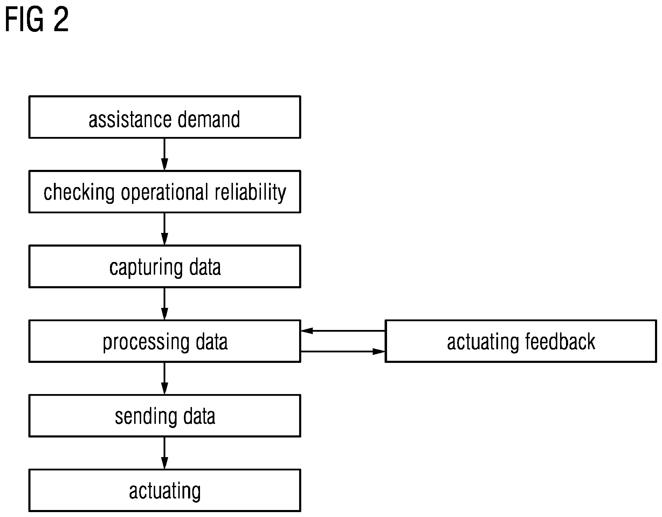

Fig. 2 shows a schematic flow chart with steps of a control method to guide a malfunctional autonomous vehicle 12. The control method can be in particular carried out by the control system 10 described with reference to fig. 1.

In a first step the autonomous vehicle 12 sends an assistance demand due to a malfunction of for example its surveillance devices like radar, lidar or its positioning system.

Then, it is checked if critical devices for driving the autonomous vehicle 12 as the acceleration means 44, the steering means 46 and/or the directional means 48 are still operating reliable.

In the next step, data from the surroundings 18 of the autonomous vehicle 12 are captured by a remote-control unit 14 and sent to a processing means 26 where the data are processed and then sent to the actuator unit 36 in order to actuate the autonomous vehicle 12, i.e. drive the autonomous vehicle 12 for example to a fleet workshop. When processing the data, the actuator unit 36 gives an actuation feedback 42 to the processing means 26 based on information from a gyroscope 38 and/or an accelerometer 40 in order to enable the processing means to more precise process the data from the surroundings 18 into control commands 27 for the actuator unit 36.

Sometimes an autonomous vehicle 12 needs to have extended guidance in case that some of the devices that are critical for autonomous driving are not functioning properly anymore. The above-described control method and control system 10 provide possibilities to retrieve such a malfunctional autonomous vehicle 12.

### Reference list

- 10: control system
- 12: autonomous vehicle
- 14: remote-control unit
- 16: monitoring means
- 18: surroundings
- 20: drone
- 22: video camera
- 24: first wireless communication means
- 26: processing means
- 27: control commands
- 28: second wireless communication means
- 30: backend
- 32: third wireless communication means
- 34: logistics center
- 36: actuator unit
- 38: gyroscope
- 40: accelerometer
- 42: actuation feedback
- 44: acceleration means
- 46: steering means
- 48: directional means

## Claims

1. Control method to guide a malfunctional autonomous vehicle (12), in particular an autonomous commercial vehicle (12), the control method comprising the following steps:
- providing a remote-control unit (14) with a monitoring means (16) to monitor the surroundings (18) of the autonomous vehicle (12), the remote-control unit (14) further comprising a first wireless communication means (24) to enable wireless communication;
- providing a processing means (26) to process the data captured by the monitoring means (16);
- providing the autonomous vehicle (12) with a second wireless communication means (28) to enable wireless communication, the autonomous vehicle (12) further comprising an actuator unit (36) to enable actuation of the autonomous vehicle (12);
- capturing the data of the surroundings (18) of the autonomous vehicle (12) and communicating the captured data to the processing means (26);
- processing the captured data into acceleration and/or steering control commands (27);
- sending the acceleration and/or steering control commands (27) to the actuator unit (36); and
- actuating the autonomous vehicle (12) according to the received acceleration and/or steering control commands (27).

2. Control method according to claim 1,
**characterized by** the remote-control unit (14) being provided by a drone (20), wherein in particular the monitoring means (16) being provided by at least two video cameras (22) to capture the data of the surroundings (18), wherein in particular the data of the surroundings (18) are captured while the drone (20) is moving.

3. Control method according to claim 2,
**characterized by** the drone (20) being moving in the neighborhood of the autonomous vehicle (12) when the autonomous vehicle (12) is being actuated according to the received acceleration and/or steering control commands (27).

4. Control method according to any of the claims 1 to 3,
**characterized by** the actuator unit (36) being provided with a gyroscope (38) and an accelerometer (40), the gyroscope (38) and the accelerometer (40) sending an actuation feedback (42) to the processing means (26), the processing means (26) processing the captured data into acceleration and/or steering control commands (27) based on the actuation feedback (42).

5. Control method according to any of the claims 1 to 4,
**characterized by** the acceleration and/or steering control commands (27) being executed by at least one of an acceleration means (44) for speeding up and braking the autonomous vehicle (12), a steering means (46) for steering the autonomous vehicle (12) and a directional means (48) to direct the autonomous vehicle (12) to the forward or to the backward direction.

6. Control method according to claim 5,
**characterized by** checking the acceleration means (44), the steering means (46) and the directional means (48) for operational reliability.

7. Control method according to any of the claims 1 to 6,
**characterized by** the malfunctional autonomous vehicle (12) communicating an assistance demand due to malfunction to a logistics center (34), the logistics center (34) controlling the remote-control unit (14).

8. Control system (10) to guide a malfunctional autonomous vehicle (12), the control system (10) comprising:
- a remote-control unit (14) with a monitoring means (16) to monitor the surroundings (18) of the autonomous vehicle (12), the remote-control unit (14) further comprising a first wireless communication means (24) to enable wireless communication;
- a logistics center (34) comprising a third wireless (32) communication means to communicate with the autonomous vehicle (12) and with the remote-control unit (14), the logistics center (34) being designed to control the remote-control unit (14); and
- a processing means (26) to process data captured by the remote-control unit (14) when monitoring the surroundings (18) of the autonomous vehicle (12) into acceleration and/or steering control commands (27), the processing means (26) in particular being designed to process the data captured by the remote-control unit (14) based on an actuation feedback (42) of the autonomous vehicle (12).

9. Control system (10) according to claim 8,
**characterized by** the remote-control unit (14) being a drone (20) having at least two video cameras (22) to capture the data of the surroundings (18).

10. Control system (10) according to any of the claims 8 or 9,
further comprising an acceleration means (44) for speeding up and braking the autonomous vehicle (12), a steering means (46) for steering the autonomous vehicle (12), a directional means (48) to direct the autonomous vehicle (12) to the forward or to the backward direction, a gyroscope (38) and an accelerometer (40).
